# EUROPEAN PATENT SPECIFICATION

(11) **EP 1 496 675 B1**
(45) Date of publication and mention of the grant of the patent: **24.12.2008**
(21) Application number: 04015395.9
(22) Date of filing: 30.06.2004
(51) Int. Cl.: H04M 1/02

(54) **Slidable mobile phone with motor**
Verschiebbares bewegliches Telefon mit Motor
Telephone mobile glissable avec un moteur

(30) Priority: 10.07.2003 KR 2003046922
(43) Date of publication of application: 12.01.2005
(73) Proprietor: LG ELECTRONICS INC., Seoul (KR)
(72) Inventor: Ahn, Byung-Jin, Ansan Gyeonggi-Do (KR); Kwon, Kap Joo, Jangan-Gu Suwon Gyeonggi-Do (KR)
(74) Representative: Beyer, Andreas

(56) References cited:
- EP-A- 1 148 692
- US-A- 6 141 310
- US-A1- 2001 009 847
- US-A1- 2003 003 962

## Description

### BACKGROUND OF THE INVENTION

### 1. Field of the Invention

The present invention relates to an open and close apparatus of a slide type portable terminal, and more particularly, to an open and close apparatus of a slide type portable terminal capable of automatically opening and closing a display unit.

### 2. Description of the Conventional Art

Generally, a portable terminal is divided into a flip type that a flip is rotatably mounted at a body so that an input button region can be open and closed; a folder type composed of a body having a dial button, a menu button, etc. and a folder rotatably mounted at the body and having an LCD; and etc. Recently, a portable terminal having a large display unit for displaying various information is being required.

According to this, a slide open and close type portable terminal composed of: a display unit having a large LCD for displaying various information; and a body unit for inputting information by a user is being increased.

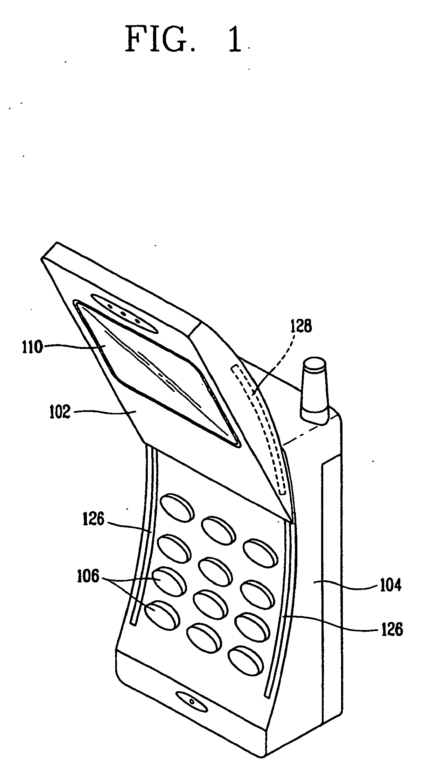

FIG. 1 is a perspective view showing a slide open and close type portable terminal in accordance with the conventional art.

The conventional slide open and close type portable terminal comprises: a display unit 102 having an LCD 110 for displaying each kind of information; a body unit 104 slidably mounted at the display unit 102 and having each kind of adjustment key 106 at the front surface thereof; and sliding units 126 and 128 installed between the display unit 102 and the body unit 104 for slidably opening and closing the display unit 102.

The sliding units 126 and 128 are composed of: a guide groove 126 formed at both lateral surfaces of the body unit 104 in a longitudinal direction; and a guide rail 128 formed at both edges of the display unit 102 and inserted into the guide groove 126 thus to be moved in a longitudinal direction.

The sliding units 126 and 128 of the conventional portable terminal are open when the user manually pushes the display unit 102 in a longitudinal direction, and are closed when the user manually pulls the display unit 102 in the opposite direction to the first direction.

However, in the conventional slide open and close type portable terminal, the user has to manually open the sliding units by pushing the display unit in a longitudinal direction and close the sliding units by pushing the display unit in the opposite direction to the first direction thereby to have inconvenience in using.

A further slide-type terminal of the above-described kind is known from US 2001/009847 A1. In this known terminal, a body unit of the terminal is provided with control buttons, activation of which causes a display unit of the terminal to slide open or close.

US 2003/003962 A1 discloses a similar portable phone comprising an open/close button, pressing of which activates a piezoelectric actuator to trigger a front cover of the phone to open or close automatically.

EP 1 148 692 A2 concerns a portable electronic device having a user interface that is protected by a motorised slide. The motor can be started by a force sensor which is able to detect a pushing/pulling action of a slidable cover.

It is an object of the present invention to provide a slide open and close type portable terminal capable of increasing a user's convenience by automatically sliding the display unit on a body unit.

To achieve the above object, the present invention provides a portable terminal having all the features of claim 1. Preferred embodiments are given in the dependent sub-claims.

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view of a slide open and close type portable terminal in accordance with the conventional art;
FIG. 2 is a perspective view of a slide open and close type portable terminal according to one embodiment of the present invention;
FIG. 3 is a disassembled perspective view of the slide open and close type portable terminal according to one embodiment of the present invention;
FIG. 4 is an enlargement view of 'A' part of FIG. 3;
FIG. 5 is a lateral view showing a switching unit of an open and close apparatus of the slide type portable terminal according to one embodiment of the present invention;
FIGs. 6 to 8 are operational state views of the open and close apparatus of the slide type portable terminal according to one embodiment of the present invention;
FIG. 9 is a block diagram showing a switching unit of an open and close apparatus of a slide type portable terminal according to a second embodiment of the present invention;
FIG. 10 is a flow chart showing a control order of the open and close apparatus of the slide type portable terminal according to the second embodiment of the present invention;
FIG. 11 is a block diagram showing a switching unit of an open and close apparatus of a slide type portable terminal according to a third embodiment of the present invention; and
FIGs. 12 to 14 are operational state views of the open and close apparatus of a slide type portable terminal according to the third embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, preferred embodiments of an open and close apparatus of a slide type portable terminal according to the present invention will be explained with reference to the attached drawings.

Even if a plurality of embodiments may exist in the open and close apparatus of a slide type portable terminal according to the present invention, the most preferred embodiment will be explained hereinafter.

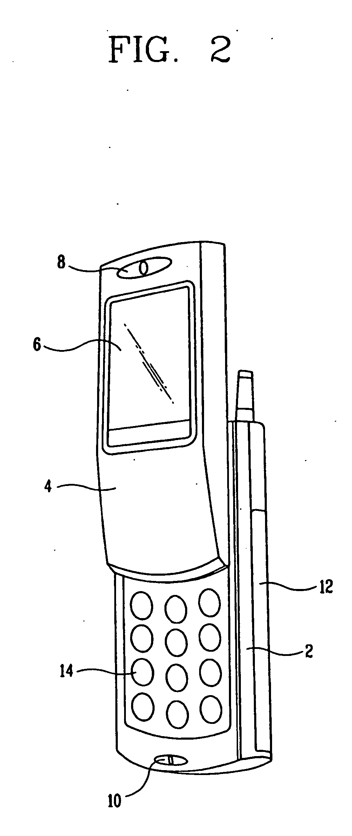

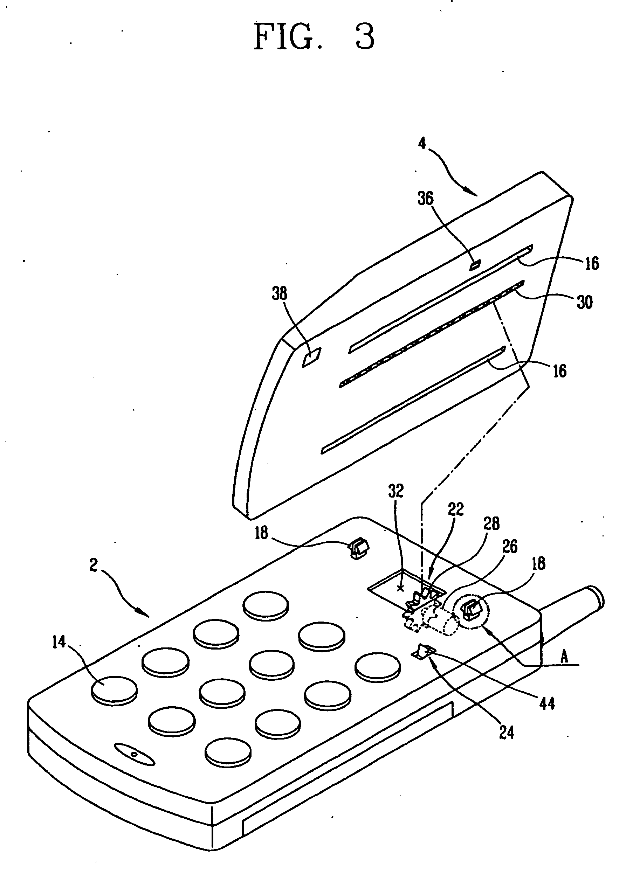

FIG. 2 is a perspective view of a slide open and close type portable terminal according to one embodiment of the present invention, and FIG. 3 is a disassembled perspective view of the slide open and close type portable terminal according to one embodiment of the present invention.

The slide open and close type portable terminal according to one embodiment of the present invention comprises: a body unit 2 provided with each kind of adjustment key 14; a display unit 4 slidably mounted at the body unit 2 and having an LCD 6 for displaying image information; and an open and close apparatus for automatically opening and closing the display unit 4.

A speaker 8 is installed at the front surface of the display unit 4, a mike 10 is installed at the front surface of the body unit 2, and a battery 12 is installed at the rear surface of the body unit 2.

The slide open and close apparatus includes: a guide unit 20 formed between the rear surface of the display unit 4 and the front surface of the body unit 2 for guiding the display unit 4 to be slide-moved in a longitudinal direction; a driving unit 22 for generating a driving force so that the display unit 4 can be slide-moved; and a switching unit 24 for turning on/off the driving unit 22 by a user's adjustment.

The guide unit 20 is composed of: a guide groove 16 formed at both edges of the rear surface of the display unit 4 in a longitudinal direction; and a guide hook 18 formed at the front surface of the body unit 2 and fitted-coupled to the guide groove 16 thus to be slide-moved along the guide groove 16 in a longitudinal direction.

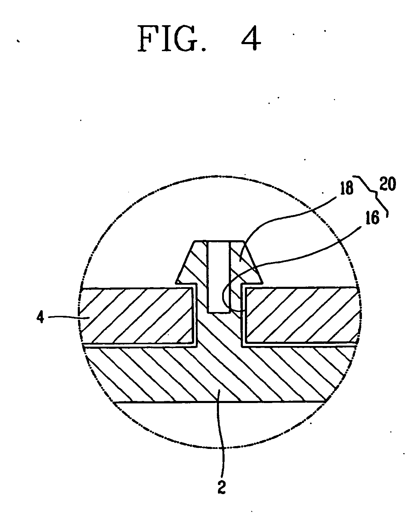

As shown in FIG. 4, the guide hook 18 is protruded from the front surface of the body unit 2, and the end portion thereof is diverged to both sides. The guide hook 18 is formed to have an elastic force thereby to prevent from being detached from the inner side surface of the guide groove 16 when inserted into the guide groove 16.

The driving unit 22 is composed of: a driving motor 26 mounted at the body unit 2 for generating a rotative force when a power is applied; a pinion gear 28 mounted at a rotational shaft of the driving motor 26 thus to be rotated together, and arranged to expose a part thereof to the upper surface of the body unit 2; and a rack gear 30 formed at the rear surface of the display unit 4 in a longitudinal direction and gear-coupled to the pinion gear 28. A penetration hole 32 for exposing the pinion gear 28 to outside is formed at the upper surface of the body unit 2.

In the driving unit 22, when a forward power source is applied to the driving motor 26, the pinion gear 28 is rotated in a forward direction, the rack gear 30 gear-coupled to the pinion gear 28 is linearly-moved, and the display unit 4 is opened. Also, when a reverse power source is applied to the driving motor 26, the pinion gear 28 is rotated in a reverse direction, the rack gear 30 is linearly-moved in a reverse direction, and the display unit 4 is closed.

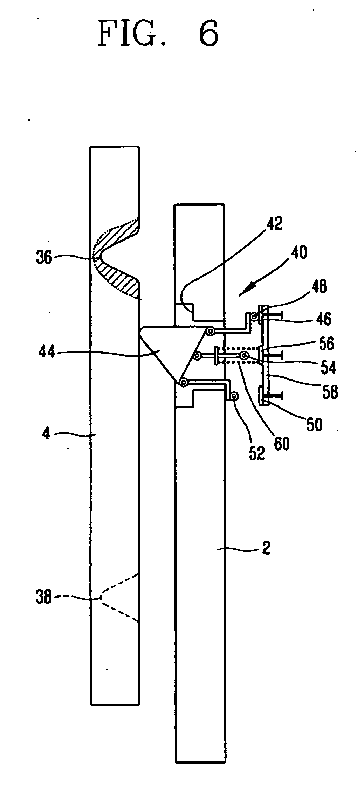

As shown in FIG. 6, the switching unit 24 is composed of: a first switch operation groove 36 and a second switch operation groove 38 formed at the lower surface of the display unit 4; and a driving switch 40 protruded at the upper surface of the body unit 2, for turning off a power source at the time of being inserted into the first switch operation groove 36 and the second switch operation groove 38 and for turning on a power source at the time of being detached from the first and second switch operation grooves 36 and 38.

The first switch operation groove 36 is formed at a position that the driving switch 40 is inserted when the display unit 4 is closed, and the second switch operation groove 38 is formed at a position that the driving switch 40 is inserted when the display unit 4 is open to the maximum.

The driving switch 40 is composed of: a switch lever 44 mounted in an insertion groove 42 formed at the body unit 2 and protruded at the upper surface of the body unit 2 with a certain height; a first movable terminal 48 connected to the lower side of the switch lever 44 and linearly-moved when the switch lever 44 is inclined upwardly thereby to be in contact with a first fixed terminal 46; and a second movable terminal 52 connected to the lower side of the switch lever 44 and linearly-moved when the switch lever 44 is inclined downwardly thereby to be in contact with a second fixed terminal 50.

A ground movable terminal 54 is connected to the center of the lower side of the switch lever 44. When the switch lever 44 is positioned with an upright state, the ground movable terminal 54 is in contact with a ground fixed terminal 56. The first fixed terminal 46, the second fixed terminal 50, and the ground fixed terminal 56 are supported by a supporting plate 58.

A spring 60 is installed between the supporting plate 58 and the switch lever 44 thereby to provide an elastic force to the switch lever 44.

The switch lever 44 has a sectional surface of a triangle shape. When the switch lever 44 is inserted into the first switch operation groove 36 and the second switch operation groove 38, the ground movable terminal 54 and the ground fixed terminal 56 come in contact with each other and a power source is turned off. Also, when the user pushes the display unit 4 in an open direction, the switch lever 44 is upwardly inclined. When the first movable terminal 48 and the first fixed terminal 46 come in contact with each other, a forward power source is applied to the driving motor 26. When the user pushes the display unit 4 in a closed direction, the switch lever 44 is downwardly inclined. Also, when the second movable terminal 52 and the second fixed terminal 50 come in contact with each other, a reverse power source is applied to the driving motor 26.

Operation of the slide open and close type portable terminal according to one embodiment of the present invention will be explained as follows.

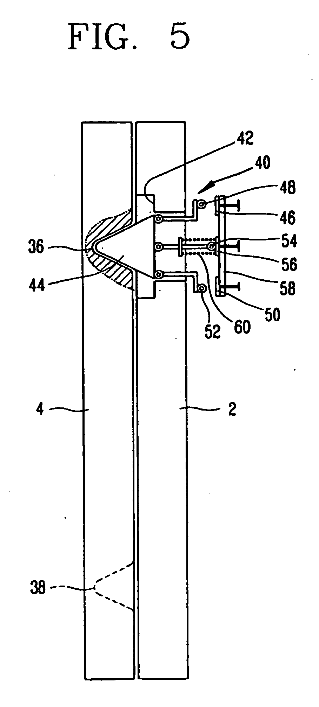

FIGs. 5 to 8 are operational state views of the slide open and close type portable terminal according to one embodiment of the present invention.

As shown in FIG. 5, when the display unit 4 is closed, the switch lever 44 is inserted into the first switch operation groove 36 thus to be positioned with an upright state and a power source is shielded. At this time, the ground movable terminal 54 and the ground fixed terminal 56 come in contact with each other.

Under this state, when the user pushes the display unit 4 in an open direction in order to use the portable terminal, as shown in FIG. 6, the switch lever 44 is detached from the first switch operation groove 36 and comes in contact with the rear surface of the display unit 4 thus to be upwardly inclined. Then, the ground movable terminal 54 and the ground fixed terminal 56 are separated from each other, and the first movable terminal 48 and the first fixed terminal 46 come in contact with each other and thereby a forward power source is applied to the driving motor 26.

When a forward power source is applied to the driving motor 26, the pinion gear 28 is rotated, the rack gear 30 gear-coupled to the pinion gear 26 is linearly-moved, and the display unit 4 where the rack gear 30 is mounted is slide-moved in an open direction.

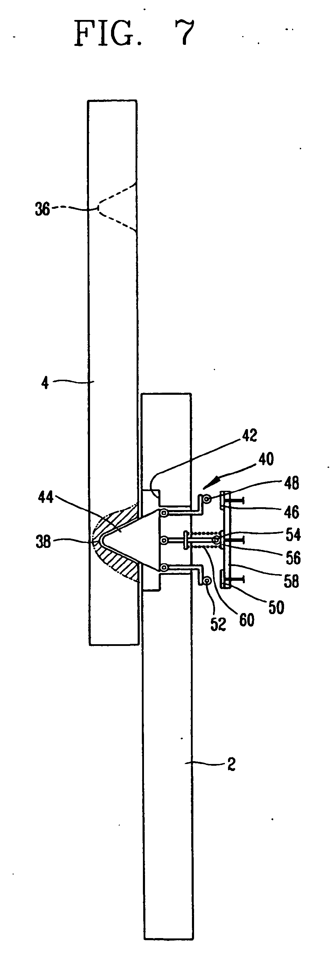

When the switch lever 44 is inserted into the second switch operation groove 38 accordingly as the display unit 4 is continuously moved, as shown in FIG. 7, the switch lever 44 is positioned with an upright state, the first movable terminal 48 is detached from the first fixed terminal 46, and a power source to the driving motor 26 is shielded. At this time, the display unit 4 is in a maximum open state.

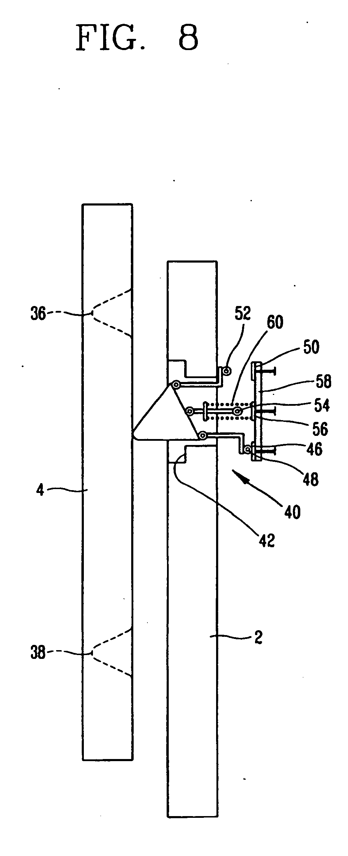

Under this state, when the user pushes the display unit 4 in a closed direction after using the portable terminal, as shown in FIG. 8, the switch lever 44 is detached from the second switch operation groove 38 thus to be downwardly inclined and the second movable terminal 52 is linearly moved thus to be in contact with the second fixed terminal 50. According to this, a reverse power source is applied to the driving motor 26 and thereby the pinion 28 is rotated in a reverse direction thus to linearly move the rack gear 30. Then, the display unit 4 is moved in a closed direction.

When the switch lever 44 is inserted into the first switch operation groove 36 accordingly as the display unit 4 is moved, a power supply to the driving motor 26 is shielded and the display unit 4 maintains a closed state.

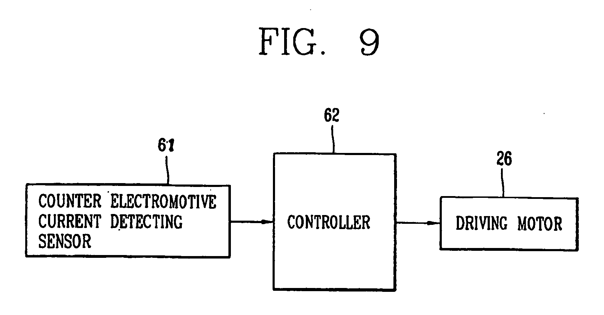

FIG. 9 is a block diagram showing a switch unit of a slide open and close type portable terminal according to a second embodiment of the present invention.

The switch unit of the open and close apparatus of a slide type portable terminal is composed of: a counter electromotive current detecting sensor 61 for detecting a counter electromotive current generated when a rotor of the driving motor 26 is forcibly rotated; and a controller 62 for driving the driving motor 26 in a forward direction or a reverse direction according to a signal applied from the counter electromotive current detecting sensor 61.

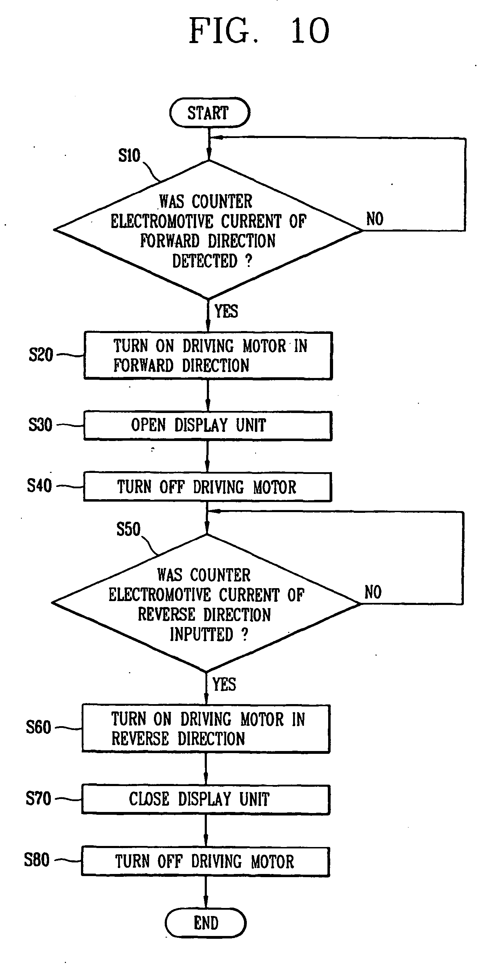

Operation of the switch unit according to the second embodiment will be explained with reference to FIG. 10. When the user pushes the display unit 4 in an open direction, the rack gear 30 mounted at the display unit 4 and the pinion gear 28 gear-coupled to the rack gear 30 are rotated. According to this, the rotor of the driving motor 26 is forcibly rotated, and a counter electromotive voltage is generated at a winding coil that winds the periphery of the rotor in proportional to the rotation speed. The generated counter electromotive current is detected by the counter electromotive current detecting sensor 61, and the signal is applied to the controller 62 (S10).

Then, the controller 62 applies a forward power source to the driving motor 26 thereby to drive the driving motor 26 in a forward direction (S20). According to this, the display unit 4 is automatically open (S30).

When the display unit 4 is in a maximum open state, a power source applied to the driving motor is shielded by a power shielding means and the display unit maintains the open state. The power shielding means is installed between the display unit and the body unit, and is switched when the display unit is in a maximum open state thereby to shield a power source (S40).

When the user pushes the display unit 4 in a closed direction after using the portable terminal, a counter electromotive current in the reverse direction is detected by the counter electromotive current detecting sensor 61 and the signal is applied to the controller 62. Then, the controller 62 applies a reverse current to the driving motor 26 thereby to drive the driving motor 26 and to provide a driving force by which the display unit 4 is automatically closed (S50, S60).

When the display unit 4 is completely closed, a power applied to the driving motor 26 is shielded by the power shielding means (S70, S80).

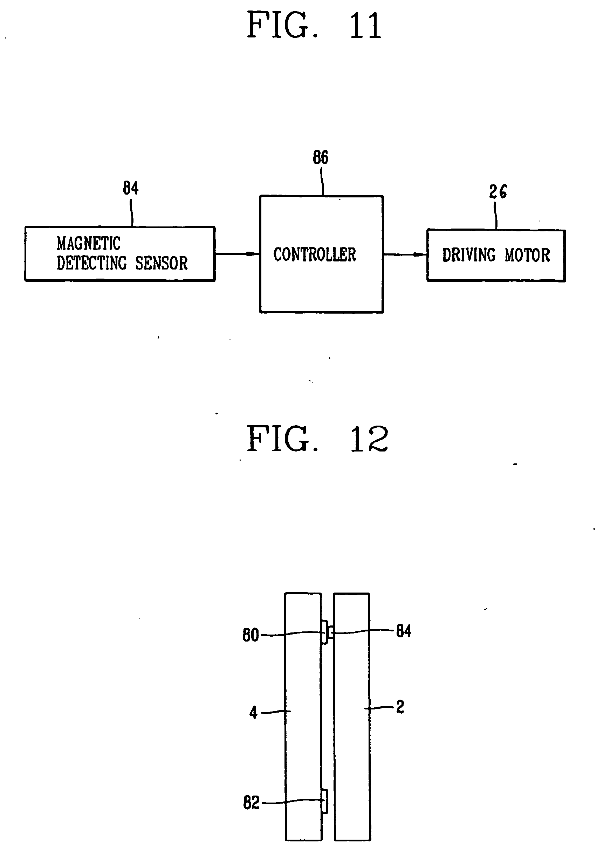

FIG. 11 is a block diagram showing a switching unit of an open and close apparatus of a slide type portable terminal according to a third embodiment of the present invention, and FIG. 12 is a lateral view showing the switch unit of the open and close apparatus of the slide type portable terminal according to the third embodiment of the present invention.

The switch unit of the open and close apparatus of a slide type portable terminal according to the third embodiment of the present invention includes: a first magnet 80 and a second magnet 82 mounted at the lower surface of the display unit 4 with a certain interval in a longitudinal direction; a magnetic detecting sensor 84 mounted at the upper surface of the body unit 2 and opposite to either the first magnet 80 and the second magnet 82, for detecting a magnetic force of the first and second magnets 80 and 82; and a controller 86 for driving the driving motor 26 in a forward direction or a reverse direction by a signal applied from the magnetic detecting sensor 84.

Operation of the switch unit of the open and close apparatus of a slide type portable terminal according to the third embodiment will be explained. As shown in FIG. 12, when the display unit 4 is in a closed state, the magnetic detecting sensor 84 is arranged to be opposite to the first magnet 80 thereby to detect a magnetic force of the first magnet 80. In this case, the controller 86 maintains the OFF state of the driving motor 26.

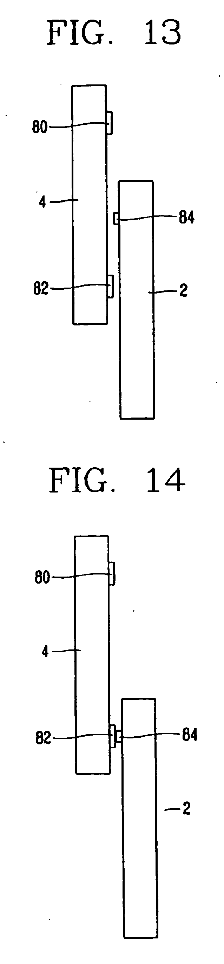

Under this state, when the user pushes the display unit 4 in an open direction, as shown in FIG. 13, a gap between the magnetic detecting sensor 84 and the first magnet 80 becomes wide and thereby the magnetic detecting sensor 84 does not detect a magnetic force. At this time, the controller 86 drives the driving motor 26 in a forward direction by a signal applied from the magnetic detecting sensor 84 thereby to automatically open the display unit 4.

When the display unit 4 is in a maximum open state, as shown in FIG. 14, the magnetic detecting sensor 84 is arranged to be opposite to the second magnet 82 thereby detect a magnetic force. Then, when the signal is applied to the controller 86, the controller 86 stops the driving motor 26 thereby to maintain the open state of the display unit 4.

Then, when the user pushes the display unit 4 in a closed direction after using the portable terminal, the magnetic detecting sensor 84 becomes far away from the second magnet 82 thereby not to detect a magnetic force. Also, when the signal is applied to the controller 86, the controller 86 drives the driving motor 26 in a reverse direction thus to provide a driving force by which the display unit 4 is closed. When the magnetic detecting sensor 84 is arranged to be opposite to the first magnet 80, the magnetic detecting sensor 84 detects a magnetic force thus to apply the signal to the controller 86. According to this, the controller 86 turns off the driving motor 26 thereby to maintain the closed state of the display unit 4.

In the open and close apparatus of a slide type portable terminal according to the present invention, when the user pushes the display unit in an open direction, the switch unit is operated thus to drive the driving motor in a forward direction and thereby to automatically open the display unit. Also, when the user pushes the display unit in a closed direction, the switch unit is operated thus to drive the driving motor in a reverse direction thereby to automatically close the display unit. According to this, the user's convenience is increased.

## Claims

1. A portable terminal comprising:
- a body unit (2) provided with at least one key (14) and a microphone (10);
- a display unit (4) slidably mounted at the body unit (2) and having a display (6) and a speaker (8);
- a guide unit (20) formed between the display unit (4) and body unit (2) for guiding the display unit (4) to be slide-moved on the body unit (2);
- a driving unit (22) for linearly moving the display unit (4);
- a switching unit (24) for applying a forward power source and a reverse power source to the driving unit (22),
**characterized by** the forward power source is applied to the driving unit (22) at the time of pushing the display unit (4) in an open direction, and the reverse power source is applied to the driving unit (22) at the time of pushing the display unit (4) in a closed direction,
wherein the starting of the applying of the forward and reverse power source and the arrival of the display unit (4) in the open or closed state is detected by either a first switch operation groove (36), a second switch operation groove (38) and a driving switch (40), a counter electromotive current detecting sensor (61) or a magnetic detecting sensor (84), and
wherein the guide unit (20) is composed of:
- a guide groove (16) formed at the rear surface of the display unit (4) in a longitudinal direction; and
- a guide hook (18) formed at the front surface of the body unit (2), protruding from the front surface of the body unit (2) and fitted-coupled to the guide groove (16) thus to be slide-moved along the guide groove in a longitudinal direction.

2. The terminal of claim 1, wherein the driving unit (22) is composed of:
- a driving motor (26) mounted at the body unit (2) for generating a rotative force when a power is applied;
- a pinion gear (28) mounted at a rotational shaft of the driving motor (26) thus to be rotated together; and
- a rack gear (30) formed at the rear surface of the display unit (4) in a longitudinal direction and gear-coupled to the pinion gear (28).

3. The terminal of claim 2, wherein the switching unit is composed of:
- first and second switch operation grooves (36, 38) formed at the display unit (4) with a certain interval in a longitudinal direction; and
- a driving switch (40) mounted at the upper surface of the body unit (2), for turning off a power source at the time of being inserted into the first and second switch operation grooves (36, 38) and for operating the driving motor (26) in a forward direction or a reverse direction at the time of being detached from the first and second switch operation grooves (36, 38).

4. The terminal of claim 3, wherein the driving switch (40) is composed of:
- a switch lever (44) mounted at the upper surface of the body unit (2) to be exposed to outside;
- a first movable terminal (48) connected to the lower surface of the switch lever (44) and linearly moved when the switch lever (44) is inclined in one direction, for applying a forward power source to the driving motor (26); and
- a second movable terminal (52) connected to the lower surface of the switch lever (44) and linearly moved when the switch lever (44) is inclined in another direction, for applying a reverse power source to the driving motor (26).

5. The terminal of claim 4, wherein the driving switch (40) further comprises:
- a first fixed terminal (46) contacting the first movable terminal (48); and
- a second fixed terminal (50) contacting the second movable terminal (52).

6. The terminal of claim 5, wherein the first and second fixed terminals (46, 50) are supported by a supporting plate (58), and a spring (60) for providing an elastic force to the switch lever (44) is installed between the supporting plate (58) and the switch lever (44).

7. The terminal of claim 2, wherein the switching unit is constituted as a counter electromotive current detecting sensor (61) for detecting a counter electromotive current generated when a rotor of the driving motor (26) is forcibly rotated and thereby driving the driving motor (26) in a forward direction or a reverse direction.

8. The terminal of claim 7, wherein the counter electromotive current detecting sensor (61) is a sensor for detecting a counter electromotive current generated when the rotor of the driving motor (26) is forcibly rotated accordingly as the display unit (4) is pushed in an open direction or a closed direction, and thereby applying the signal to a controller (62).

9. The terminal of claim 2, wherein the switching unit includes:
- a first magnet (80) and a second magnet (82) mounted at the lower surface of the display unit (4) with a certain interval in a longitudinal direction; and
- a magnetic detecting sensor (84) mounted at the upper surface of the body unit (2) and opposite to either the first magnet (80) and the second magnet (82), for detecting a magnetic force of the first and second magnets.

10. The terminal of claim 9, wherein the first magnet (80) is mounted at a position that the display unit (4) is closed when arranged to be opposite to the magnetic detecting sensor (84), and the second magnet (82) is mounted at a position that the display unit (84) is open when arranged to be opposite to the magnetic detecting sensor (84).

## Patentansprüche

1. Tragbares Endgerät mit:
- einer Haupteinheit (2), die mit mindestens einer Taste (14) und einem Mikrofon (10) versehen ist,
- einer Anzeigeeinheit (4), die verschiebbar an der Haupteinheit (2) angebracht ist und eine Anzeige (6) und einen Lautsprecher (8) aufweist,
- einer Führungseinheit (20), die zwischen der Anzeigeeinheit (4) und der Haupteinheit (2) zum gleitverschieblichen Führen der Anzeigeeinheit (4) auf der Haupteinheit (2) ausgebildet ist,
- einer Antriebseinheit (22) zum geradlinigen Bewegen der Anzeigeeinheit (4),
- einer Schalteinheit (24) zum Verbinden einer Vorwärts-Energiequelle und einer Rückwärts-Energiequelle mit der Antriebseinheit (22),
**dadurch gekennzeichnet, dass** die Vorwärts-Energiequelle beim Drücken der Anzeigeeinheit (4) in eine geöffnete Richtung mit der Antriebseinheit (22) verbunden wird und die Rückwärts-Energiequelle beim Drücken der Anzeigeeinheit (4) in eine geschlossene Richtung mit der Antriebseinheit (22) verbunden wird,
wobei der Beginn des Verbindens der Vorwärts- und Rückwärts-Energiequelle und das Eintreffen der Anzeigeeinheit (4) in dem geöffneten oder geschlossenen Zustand durch entweder eine erste Schalterfunktionsnut (36), eine zweite Schalterfunktionsnut (38) und einen Betriebsschalter (40), einen Gegenelektromotorischer-Strom-Erfassungssensor (61) oder einen Magnetismus-Erfassungssensor (84) erfasst wird, und
wobei die Führungseinheit (20) besteht aus
- einer Führungsnut (16), die an der Rückseite der Anzeigeeinheit (4) in einer Längsrichtung ausgebildet ist, und
- einem Führungshaken (18), der an der Vorderseite der Haupteinheit (2) ausgebildet ist, von der Vorderseite der Haupteinheit (2) hervorsteht und eingepasst mit der Führungsnut (16) gekoppelt ist, um so entlang der Führungsnut in einer Längsrichtung verschoben zu werden.

2. Endgerät nach Anspruch 1, wobei die Antriebseinheit (22) besteht aus:
- einem Antriebsmotor (26), der an der Haupteinheit (2) zum Erzeugen einer Drehkraft angebracht ist, wenn eine Spannung angelegt wird,
- einem Ritzel (28), das an einer Drehwelle des Antriebsmotors (26) angebracht ist, um **dadurch** zusammen gedreht zu werden, und
- einer Zahnstange (30), die in einer Längsrichtung an der Rückseite der Anzeigeeinheit (4) ausgebildet und mit dem Zahnrad (28) antriebsgekoppelt ist.

3. Endgerät nach Anspruch 2, wobei die Schalteinheit besteht aus:
- ersten und zweiten Schalterfunktionsnuten (36, 38), die mit einem gewissen Abstand in einer Längsrichtung an der Anzeigeeinheit (4) ausgebildet sind, und
- einem Betriebsschalter (40), der an der Vorderseite der Haupteinheit (2) angebracht ist zum Ausschalten einer Energiequelle dann, wenn er in die ersten und zweiten Schalterfunktionsnuten (36, 38) eingefügt ist, und zum Betreiben des Antriebsmotors (26) in einer Vorwärtsrichtung oder einer Rückwärtsrichtung dann, wenn er aus den ersten und zweiten Schalterfunktionsnuten (36, 38) entfernt ist.

4. Endgerät nach Anspruch 3, wobei der Betriebsschalter (40) besteht aus:
- einem Schalthebel (44), der an der Oberseite der Haupteinheit (2) angebracht ist, um nach außen freizuliegen,
- einem ersten bewegbaren Anschluss (48), der mit der Unterseite des Schalthebels (44) verbunden ist und geradlinig bewegt wird, wenn der Schalthebel (44) in eine Richtung gekippt wird, um eine Vorwärts-Energiequelle mit dem Antriebsmotor (26) zu verbinden, und
- einem zweiten bewegbaren Anschluss (52), der mit der Unterseite des Schalthebels (44) verbunden ist und geradlinig bewegt wird, wenn der Schalthebel (44) in eine andere Richtung gekippt wird, um eine Rückwärts-Energiequelle mit dem Antriebsmotor (26) zu verbinden.

5. Endgerät nach Anspruch 4, bei dem der Betriebsschalter (40) ferner aufweist:
- einen ersten feststehenden Anschluss (46), der den ersten bewegbaren Anschluss (48) kontaktiert, und
- einen zweiten feststehenden Anschluss (50), der den zweiten bewegbaren Anschluss (52) kontaktiert.

6. Endgerät nach Anspruch 5, bei dem die ersten und zweiten feststehenden Anschlüsse (46, 50) von einer Stützplatte (58) getragen werden, wobei eine Feder (60) zum Bereitstellen einer Federkraft an dem Schalthebel (44) zwischen der Stützplatte (58) und dem Schalthebel (44) angebracht ist.

7. Endgerät nach Anspruch 2, bei dem die Antriebseinheit als ein Gegenelektromotorischer-Strom-Erfassungssensor (61) zum Erfassen eines gegenelektromotorischen Stroms ausgebildet ist, der erzeugt wird, wenn ein Rotor des Antriebsmotors (26) unter Krafteinwirkung gedreht wird und dabei den Antriebsmotor (26) in eine Vorwärtsrichtung oder eine Rückwärtsrichtung antreibt.

8. Endgerät nach Anspruch 7, bei dem der Gegenelektromotorischer-Strom-Erfassungssensor (61) ein Sensor zum Erfassen eines gegenelektromotorischen Stroms ist, der erzeugt wird, wenn der Rotor des Antriebsmotors (26) entsprechend unter Krafteinwirkung gedreht wird, wenn die Anzeigeeinheit (4) in eine geöffnete Richtung oder eine geschlossene Richtung gedrückt wird, wodurch das Signal an eine Steuerung (62) angelegt wird.

9. Endgerät nach Anspruch 2, bei dem die Schalteinheit enthält:
- einen ersten Magneten (80) und einen zweiten Magneten (82), die mit einem gewissen Abstand in einer Längsrichtung an der Unterseite der Anzeigeeinheit (4) angebracht sind, und
- einen Magnetismus-Erfassungssensor (84), der an der Vorderseite der Haupteinheit (2) und gegenüber entweder dem ersten Magneten (80) oder dem zweiten Magneten (82) angebracht ist, um eine magnetische Kraft der ersten und zweiten Magneten zu erfassen.

10. Endgerät nach Anspruch 9, bei dem der erste Magnet (80) an einer Stelle angebracht ist, bei der er gegenüber dem Magnetismus-Erfassungssensor (84) angeordnet ist, wenn die Anzeigeeinheit (4) geschlossen ist, und der zweite Magnet (82) an einer Stelle angebracht ist, bei der er gegenüber dem Magnetismus-Erfassungssensor (84) angeordnet ist, wenn die Anzeigeeinheit (84) geöffnet ist.

## Revendications

1. Terminal portable comprenant :
- une unité de corps (2) prévue avec au moins une touche (14) et un microphone (10) ;
- une unité d'affichage (4) montée en coulissement sur l'unité de corps (2) et ayant un affichage (6) et un haut-parleur (8) ;
- une unité de guide (20) formée entre l'unité d'affichage (4) et l'unité de corps (2) pour guider l'unité d'affichage (4) pour qu'elle soit déplacée en coulissement sur l'unité de corps (2) ;
- une unité d'entraînement (22) pour déplacer de façon linéaire l'unité d'affichage (4) ;
- une unité de commutation (24) pour appliquer une source d'énergie vers l'avant et une source d'énergie inverse à l'unité d'entraînement (22),
**caractérisé en ce que** la source d'énergie vers l'avant est appliquée à l'unité d'entraînement (22) au moment où l'unité d'affichage (4) est poussée dans une direction d'ouverture, et la source d'énergie inverse est appliquée à l'unité d'entraînement (22) au moment où l'unité d'affichage (4) est poussée dans une direction de fermeture, dans lequel le début de l'application de la source d'énergie vers l'avant et inverse et l'arrivée de l'unité d'affichage (4) dans l'état ouvert ou fermé est détectée par une première rainure d'opération de commutateur (36), une deuxième rainure d'opération de commutateur (38) et un commutateur d'entraînement (40), un capteur de détection de courant contre-électromoteur (61) ou un capteur de détection magnétique (84), et
dans lequel l'unité de guide (20) est composée de :
- une rainure de guidage (16) formée sur la surface arrière de l'unité d'affichage (4) dans une direction longitudinale ; et
- un crochet de guidage (18) formé sur la surface avant de l'unité de corps (2), faisant saillie de la surface avant de l'unité de corps (2) et couplée par ajustement à la rainure de guidage (16) pour être ainsi déplacé en coulissement le long de la rainure de guidage dans une direction longitudinale.

2. Terminal selon la revendication 1, dans lequel l'unité d'entraînement (22) est composée de :
- un moteur d'entraînement (26) monté sur l'unité de corps (2) pour générer une force de rotation lorsqu'une énergie est appliquée ;
- un pignon (28) monté sur un arbre de rotation du moteur d'entraînement (26) de manière à être mis en rotation ensemble ; et
- une crémaillère (30) formée sur la surface arrière de l'unité d'affichage (4) dans une direction longitudinale et couplée par engrènement au pignon (28).

3. Terminal selon la revendication 2, dans lequel l'unité de commutation est composée de :
- une première et une deuxième rainures d'opération de commutateur (36, 38) formées sur l'unité d'affichage (4) avec un certain intervalle dans une direction longitudinale ; et
- un commutateur d'entraînement (40) monté sur la surface supérieure de l'unité de corps (2), pour couper une source d'énergie au moment de son insertion dans la première et la deuxième rainures d'opération de commutateur (36, 38) et pour faire fonctionner le moteur d'entraînement (26) dans une direction avant ou une direction inverse au moment de sa séparation de la première et la deuxième rainures d'opération de commutateur (36, 38).

4. Terminal selon la revendication 3, dans lequel le commutateur d'entraînement (40) est composé de :
- un levier de commutateur (44) monté sur la surface supérieure de l'unité de corps (2) de façon à être exposé vers l'extérieur ;
- une première borne mobile (48) connectée à la surface inférieure du levier de commutateur (44) et déplacée de façon linéaire lorsque le levier de commutateur (44) est incliné dans une direction, pour appliquer une source d'énergie vers l'avant au moteur d'entraînement (26) ; et
- une deuxième borne mobile (52) connectée à la surface inférieure du levier de commutateur (44) et déplacée de façon linéaire lorsque le levier de commutateur (44) est incliné dans une autre direction, pour appliquer une source d'énergie inverse au moteur d'entraînement (26).

5. Terminal selon la revendication 4, dans lequel le commutateur d'entraînement (40) comprend en outre :
- une première borne fixe (46) venant en contact avec la première borne mobile (48) ; et
- une deuxième borne fixe (50) venant en contact avec la deuxième borne mobile (52).

6. Terminal selon la revendication 5, dans lequel la première et la deuxième bornes fixes (46, 50) sont supportées par une plaque de support (58), et un ressort (60) pour fournir une force élastique au levier de commutateur (44) est installé entre la plaque de support (58) et le levier de commutateur (44).

7. Terminal selon la revendication 2, dans lequel l'unité de commutation est constituée comme un capteur de détection de courant contre-électromoteur (61) pour détecter un courant contre-électromoteur généré lorsqu'un rotor du moteur d'entraînement (26) est mis en rotation par force et ainsi entraîner le moteur d'entraînement (26) dans une direction avant ou une direction inverse.

8. Terminal selon la revendication 7, dans lequel le capteur de détection de courant contre-électromoteur (61) est un capteur pour détecter un courant contre-électromoteur généré lorsque le rotor du moteur d'entraînement (26) est mis en rotation par force en conséquence lorsque l'unité d'affichage (4) est poussée dans une direction d'ouverture ou une direction de fermeture, et ainsi appliquer le signal à un contrôleur (62).

9. Terminal selon la revendication 2, dans lequel l'unité de commutation inclut :
- un premier aimant (80) et un deuxième aimant (82) montés sur la surface inférieure de l'unité d'affichage (4) avec un certain intervalle dans une direction longitudinale ; et
- un capteur de détection magnétique (84) monté sur la surface supérieure de l'unité de corps (2) et opposé soit au premier aimant (80), soit au deuxième aimant (82), pour détecter une force magnétique du premier et du deuxième aimants.

10. Terminal selon la revendication 9, dans lequel le premier aimant (80) est monté en une position dans laquelle l'unité d'affichage (4) est fermée lorsqu'il est agencé de manière à être opposé au capteur de détection magnétique (84), et le deuxième aimant (82) est monté en une position dans laquelle l'unité d'affichage (4) est ouverte lorsqu'il est agencé de manière à être opposé au capteur de détection magnétique (84).
